(19) Europäisches Patentamt
European Patent Office
Office européen des brevets

(11) **EP 1 362 219 B1**

(12) **FASCICULE DE BREVET EUROPEEN**

(45) Date de publication et mention
de la délivrance du brevet:
**21.01.2009 Bulletin 2009/04**

(21) Numéro de dépôt: **02701340.8**

(22) Date de dépôt: **29.01.2002**

(51) Int Cl.:
**G01C 19/56** *(2006.01)* **G01P 9/04** *(2006.01)*

(86) Numéro de dépôt international:
**PCT/FR2002/000344**

(87) Numéro de publication internationale:
**WO 2002/068906 (06.09.2002 Gazette 2002/36)**

(54) **RESONATEUR MECANIQUE PLANAIRE SENSIBLE SELON UN AXE PERPENDICULAIRE A SON PLAN**

FLACHER MECHANISCHER RESONATOR MIT EMPFINDLICHKEIT ENTLANG EINER ZUR EBENE SENKRECHTEN ACHSE

PLANAR MECHANICAL RESONATOR SENSITIVE ALONG AN AXIS PERPENDICULAR TO ITS PLANE

(84) Etats contractants désignés:
**DE GB**

(30) Priorité: **23.02.2001 FR 0102498**

(43) Date de publication de la demande:
**19.11.2003 Bulletin 2003/47**

(73) Titulaire: **SAGEM Défense Sécurité**
**75015 Paris (FR)**

(72) Inventeur: **BEITIA, José**
**F-95390 Saint Prix (FR)**

(74) Mandataire: **Gorrée, Jean-Michel et al**
**Cabinet Plasseraud**
**52 rue de la Victoire**
**75440 Paris Cedex 09 (FR)**

(56) Documents cités:
**EP-A- 0 461 761**      **EP-A- 0 936 440**
**GB-A- 2 318 184**

**Description**

La présente invention concerne d'une façon générale le domaine des résonateurs mécaniques utilisables dans les senseurs inertiels gyrométriques ou gyroscopiques, et elle concerne plus particulièrement ceux de ces résonateurs mécaniques qui possèdent une structure vibrante monolithique plane en un matériau approprié supporté par un substrat et propre ainsi à être fabriqué par des techniques classiques de gravure chimique, de gravure au laser ou autres qui sont couramment utilisées pour la fabrication de microstructures.

Les réalisations de tels résonateurs mécaniques de type planaire sont aujourd'hui nombreuses. C'est ainsi que l'on connaît des résonateurs sensibles selon un axe contenu dans le plan du résonateur (par exemple FR-A-2 685 964) et que l'on connaît également des résonateurs sensibles selon deux axes orthogonaux contenus dans le plan du résonateur (par exemple FR-A-2 741 151).

On connaît également (par exemple EP-A-0 461 761) un résonateur mécanique à structure vibrante s'étendant selon un contour fermé annulaire de révolution ou carré sensible selon un axe perpendiculaire au plan du résonateur. Toutefois, ce résonateur connu présente une anisotropie en fréquence de sorte que son utilisation reste limitée à un mode de fonctionnement gyrométrique, sans qu'il puisse trouver une application dans un mode de fonctionnement gyroscopique.

Or il existe actuellement une demande des utilisateurs pour un résonateur mécanique monolithique plan sensible sur un axe perpendiculaire qui soit propre à fonctionner en mode gyroscopique.

On connaît également (GB-A-2 318 184) un résonateur monolithique planaire sensible selon trois axes mutuellement orthogonaux, avec deux axes (X et Y) contenus dans le plan du résonateur et avec le troisième axe (Z) perpendiculaire au plan du résonateur. Toutefois, ce dispositif présente très peu de sensibilité.

De ce fait, on ne connaît pas actuellement de résonateur monolithique planaire sensible selon trois axes mutuellement orthogonaux qui soit correctement isolé et dont les signaux soient facilement exploitables, notamment dans des senseurs gyroscopiques. En pratique, la réalisation d'un dispositif sensible selon les trois axes de référence fait aujourd'hui appel à un assemblage de plusieurs résonateurs sensibles chacun selon un ou deux axes et disposés dans des positions spatiales relatives appropriées. Ce type de montage, auquel on a recours actuellement par nécessité, se révèle coûteux et encombrant.

Or il existe actuellement une demande pressante de la part de certains utilisateurs pour que soient disponibles des capteurs monolithiques sensibles sur trois axes orthogonaux qui soient d'un coût aussi réduit que possible, notamment lorsqu'ils sont destinés à une utilisation unique (équipement d'obus guidés ou de missiles par exemple), et qui soient d'un encombrement aussi réduit que possible afin de pouvoir être logés dans un environnement où la place disponible est très comptée (par exemple ogive d'obus guindé).

L'invention a donc essentiellement pour but de proposer une structure perfectionnée propre à donner satisfaction aux diverses exigences de la pratique, tout en conservant la structure monolithique de type planaire qui est particulièrement intéressante en raison de la petitesse des dispositifs qu'elle permet de fabriquer et la relative simplicité du processus de fabrication qui autorise une production en série, voire en grande série avec des moyens fiables conduisant à des géométries d'une très grande précision.

L'invention se fonde sur le fait que la réalisation de senseurs inertiels aptes à assurer une fonction gyroscopique nécessite que le résonateur vibrant soit isotrope, notamment en fréquence et en couplage gyroscopique. D'une manière générale, quel que soit l'ordre k du mode vibratoire mis en oeuvre, l'anisotropie en fréquence ainsi que l'anisotropie de couplage gyroscopique ont pour origine un défaut de géométrie du résonateur et/ou un défaut de suspension du résonateur (le résonateur est fixé par un ensemble plus ou moins complexe de bras reliés entre eux limitant les fuites d'énergie vibratoire vers l'extérieur, mais participant à la rigidité de la structure et perturbant la déformée des deux modes utiles à la fonction gyroscopique) et/ou un défaut de matériau (les matériaux couramment utilisés pour constituer les microstructures planaires sont des matériaux cristallins qui, de par leur nature, sont anisotropes).

L'anisotropie en fréquence $\Delta f$ peut donc se décomposer en une anisotropie de géométrie $\Delta f_g$, une anisotropie de suspension $\Delta f_s$ et une anisotropie de matériau $\Delta f_m$ :

$$\Delta f = \Delta f_g + \Delta f_s + \Delta f_m$$

Pour que l'anisotropie en fréquence $\Delta f$ soit nulle, il suffit que chacun des termes $\Delta f_g$, $\Delta f_s$ et $\Delta f_m$ soit nul. L'anisotropie en fréquence sera nulle, également, si la somme algébrique des termes $\Delta f_g$, $\Delta f_s$ et $\Delta f_m$ est nulle, c'est-à-dire si la somme algébrique de deux termes, individuellement non nuls, est nulle, le troisième terme étant lui-même nul (par exemple $\Delta f_g + \Delta f_s = 0$ avec $\Delta f_g \neq 0$ et $\Delta f_s \neq 0$, et $\Delta f_m = 0$), ou bien si la somme algébrique des trois termes, individuellement non nuls ($\Delta f_g \neq 0$, $\Delta f_s \neq 0$, $\Delta f_m \neq 0$), est nulle.

De la même manière, l'anisotropie de couplage gyroscopique $\Delta \alpha$ peut se décomposer en une anisotropie de géométrie $\Delta \alpha_g$, une anisotropie de suspension $\Delta \alpha_s$ et une anisotropie de matériau $\Delta \alpha_m$ :

$$\Delta \alpha = \Delta \alpha_g + \Delta \alpha_s + \Delta \alpha_m$$

Pour que l'anisotropie de couplage gyroscopique $\Delta\alpha$ soit nulle, il suffit que chacun des termes $\Delta\alpha_g$, $\Delta\alpha_s$ et $\Delta\alpha_m$ soit nul. L'anisotropie de couplage gyroscopique $\Delta\alpha$ sera nulle, également, si la somme algébrique des termes $\Delta\alpha_g$, $\Delta\alpha_s$ et $\Delta\alpha_m$, dont certains au moins ne sont pas nuls, est nulle.

La présente invention se fonde sur ces contraintes pour proposer un capteur propre à assurer non seulement une fonction gyrométrique, mais aussi une fonction gyroscopique (anisotropie nulle par principe : $\Delta f = 0$, c'est-à-dire $\Delta f_g = \Delta f_s = \Delta f_m = 0$ ou $\Delta f_g + \Delta f_s + \Delta f_m = 0$ ; et $\Delta\alpha = 0$, c'est-à-dire $\Delta\alpha_g = \Delta\alpha_s = \Delta\alpha_m = 0$ ou $\Delta\alpha_g + \Delta\alpha_s + \Delta\alpha_m = 0$).

A ces fins, l'invention propose un résonateur mécanique à structure vibrante monolithique plane s'étendant selon un contour fermé dont l'axe de sensibilité est sensiblement perpendiculaire au plan de ladite structure, lequel résonateur, étant agencé conformément à l'invention, se caractérise en ce que la structure plane est polygonale régulière convexe à 4k sommets (k étant l'ordre du mode vibratoire mis en oeuvre lorsque le résonateur est mis en vibration) et est suspendue à un socle fixe par l'intermédiaire de n bras de suspension d'étendue sensiblement radiale disposés sensiblement symétriquement.

Dans un premier mode de réalisation préféré, la structure vibrante polygonale régulière convexe à 4k sommets possède des motifs identiques se répétant avec des intervalles angulaires de $\pi/2k$, ce grâce à quoi ladite structure vibrante polygonale présente une isotropie de géométrie ($\Delta f_g = 0$, $\Delta\alpha_g = 0$).

Ainsi, grâce aux dispositions de l'invention, on définit une structure vibrante complètement invariante par rotation autour d'un axe transverse (axe Z) pour le mode vibratoire d'ordre k : le polygone régulier convexe à 4k sommets ayant un espacement angulaire de $\pi/2k$ est invariant pour le mode vibratoire d'ordre k. Un tel résonateur ne présente aucun défaut de géométrie d'ordres k-1 et k+1, si bien que cette structure est naturellement équilibrée (insensibilité aux perturbations vibratoires externes). Ainsi, pour k = 2, le polygone est un octogone régulier qui constitue une structure plane, sensible aux rotations selon l'axe central transverse (axe Z), équilibrée géométriquement et isotrope en géométrie, se comportant comme un résonateur en anneau.

On définit ainsi une nouvelle famille de résonateurs plans dont les déformées sont contenues sensiblement dans le plan du résonateur : l'axe sensible d'un tel résonateur est donc orthogonal au plan de la structure fermée.

Pour ce qui concerne maintenant l'anisotropie de matériau, les anisotropies de fréquence et de couplage gyroscopique sont nulles si le matériau constitutif du résonateur est naturellement isotrope. Or les matériaux cristallins couramment utilisés dans ce domaine en raison de leurs qualités (possibilité de micro-usinage par gravure chimique, pertes internes réduites et donc coefficients de qualité élevés) - à savoir le quartz et le silicium - sont anisotropes, sauf pour des ordres k de certains modes vibratoires détectés, qui sont spécifiques en corrélation avec la symétrie du matériau cristallin pour lesquels ce matériau se révèle isotrope et avec l'angle de coupe de la plaquette.

Dans ces conditions, selon un autre mode de réalisation préféré, pour un mode vibratoire d'ordre 2 (k = 2), la structure plane résonante est de forme octogonale et doit être constituée en un matériau cristallin à structure trigonale, notamment en quartz, avec une coupe faite dans le plan OXY, ce grâce à quoi la structure vibrante présente une isotropie de matériau ($\Delta f_m = 0$, $\Delta\alpha_m = 0$) pour l'ordre k = 2.

De même, pour un mode vibratoire d'ordre 3 (k = 3), la structure plane résonante est de forme dodécagonale et doit être constituée en un matériau cristallin à structure cubique, notamment en silicium, avec un plan de coupe contenant l'axe OZ, ou l'axe OX, ou l'axe OY, ce grâce à quoi la structure vibrante présente une isotropie de matériau ($\Delta f_m = 0$, $\Delta\alpha_m = 0$) pour l'ordre k = 3.

Dans un autre mode de réalisation préféré, on prévoit que les bras de suspension sont au nombre n = 4k et sont espacés angulairement d'un intervalle angulaire de $\pi/2k$, ce grâce à quoi la structure vibrante présente une isotropie de suspension ($\Delta f_s = 0$, $\Delta\alpha_s = 0$).

Selon encore un autre mode de réalisation tout particulièrement préféré, si le résonateur est agencé conformément à l'invention avec une structure résonante présentant simultanément une isotropie de géométrie ($\Delta f_s = 0$, $\Delta\alpha_s = 0$) et une isotropie de matériau ($\Delta f_m = 0$, $\Delta\alpha_m = 0$) et une isotropie de suspension ($\Delta f_s = 0$, $\Delta\alpha_s = 0$) en conformité avec les dispositions exposées plus haut, alors ce résonateur est totalement isotrope en fréquence et en coefficient de couplage et il est propre à fonctionner non seulement en mode gyrométrique, mais aussi en mode gyroscopique. Un tel résonateur répond donc à certaines des requêtes des utilisateurs.

Toutefois, il est également possible de compenser une anisotropie due au matériau en introduisant une modification localisée de la géométrie du résonateur (anisotropie de géométrie) et/ou de la suspension (anisotropie de suspension) de manière que l'anisotropie introduite volontairement (géométrie et/ou suspension) compense l'anisotropie naturelle du matériau cristallin utilisé. Ainsi, selon un mode de réalisation préféré, la structure vibrante polygonale à 4k sommets est constituée en un matériau cristallin à structure non trigonale pour k = 2 ou non cubique pour k = 3, et présente donc de principe une anisotropie de matériau ($\Delta f_m \neq 0$, $\Delta\alpha_m \neq 0$). Ladite structure vibrante polygonale est alors agencée, conformément à l'invention, pour présenter en outre au moins une modification localisée de géométrie et/ou la suspension présente au moins une modification localisée, de sorte que ladite structure vibrante polygonale présente une anisotropie de géométrie ($\Delta f_g \neq 0$, $\Delta\alpha_g \neq 0$) et/ou une anisotropie de suspension ($\Delta f_s \neq 0$, $\Delta\alpha_s \neq 0$), respectivement, propre à compenser l'anisotropie de matériau, ce grâce à quoi ladite structure vibrante polygonale présente une isotropie en fréquence ( $\Delta f = 0$ ) et en couplage ( $\Delta\alpha = 0$ ) et le résonateur est propre à fonctionner en mode gyrométrique ou en mode gyroscopique. Un tel résonateur répond également à certaines requêtes des utilisateurs.

Par exemple il est possible de rendre isotrope un résonateur selon l'invention constitué en silicium et fonctionnant à l'ordre k = 2 en ajoutant quatre masses identiques uniformément réparties et/ou en modifiant la raideur des bras.

De même, il est possible de rendre isotrope un résonateur en quartz constitué selon l'invention et fonctionnant à l'ordre k = 3 en ajoutant six masses identiques uniformément réparties et/ou en modifiant la raideur des bras.

De même, il est possible que le nombre des bras de suspension soit choisi différent (inférieur) du nombre préconisé plus haut (n = 4k) pour l'obtention d'une isotropie de suspension : la raison peut par exemple être due à un espace libre insuffisant pour recevoir n = 4k bras de suspension (n = 8 bras de suspension si k = 2 et n = 12 bras de suspension si k = 3), notamment dans le cas de dispositifs gyroscopiques miniaturisés que l'on tend à développer actuellement.

Dans ces conditions, selon un autre mode de réalisation préféré, les bras de suspension sont en nombre n < 4k et sont espacés angulairement d'un intervalle angulaire de $2\pi/n$, avec n choisi tel que $n \leq k - 2$ ou $n \geq k + 2$ avec $n \neq pk$ (p nombre entier), la structure vibrante polygonale présentant donc de principe une anisotropie de suspension ( $\Delta f_s \neq 0$, $\Delta\alpha_s \neq 0$ ) . Ladite structure vibrante polygonale est alors agencée, conformément à l'invention, pour présenter en outre des défauts localisés de géométrie écartés angulairement les uns des autres d'une valeur angulaire de $\pi/k$ et aptes à provoquer un défaut de masse d'ordre 2k qui entraîne une anisotropie en géométrie ($\Delta f_g \neq 0$, $\Delta\alpha_g \neq 0$) propre à compenser l'anisotropie de suspension due au nombre insuffisant des bras de suspension, ce grâce à quoi ladite structure vibrante polygonale présente une isotropie en fréquence ($\Delta f = 0$) et en couplage ($\Delta\alpha = 0$) et le résonateur est propre à fonctionner en mode gyrométrique ou en mode gyroscopique, répondant ainsi à certaines attentes des utilisateurs.

On notera que si n = pk, le résonateur présente une anisotropie de suspension, tout en étant naturellement équilibré.

Dans ce cas, la compensation sera plus efficace si les défauts localisés de géométrie (notamment ajout de masses) sont situés au moins au niveau des liaisons ou encastrements des bras de suspension avec la structure vibrante.

Dans le cas où un résonateur constitué conformément à l'invention selon certaines des dispositions qui précèdent présente au moins une anisotropie de géométrie ( $\Delta f_g \neq 0$, $\Delta\alpha_g \neq 0$ ) , ou au moins une anisotropie de matériau ( $\Delta f_m \neq 0$, $\Delta\alpha_m \neq 0$ ) , ou au moins une anisotropie de suspension ( $\Delta f_s \neq 0$, $\Delta\alpha_s \neq 0$ ) , alors ce résonateur n'est pas totalement isotrope en fréquence et/ou en coefficient de couplage et il est propre à fonctionner seulement en mode gyrométrique, sans pouvoir être exploité en mode gyroscopique.

Pour ce qui est de la suspension de la structure vibrante et quelle que soit la solution retenue sur la base des solutions précitées, on peut faire en sorte que le socle entoure la structure plane vibrante et que les bras de suspension soient extérieurs à la structure vibrante ; ou bien aussi que le socle soit un noyau central sensiblement concentrique à la structure vibrante et que les bras de suspension soient intérieurs à la structure vibrante. Toutefois, dans le cas où le nombre des bras est égal à 4k, ou proche de cette valeur, l'espace occupé par les bras est d'autant plus important que l'ordre k est élevé, ce qui laisse peu de possibilité pour optimiser la raideur des bras permettant d'obtenir, en cas de faibles déséquilibres, un découplage mécanique avec le point d'attache, tout particulièrement dans le cas du noyau central avec les bras intérieurs à la structure vibrante à contour fermé. De ce point de vue, et en particulier pour les résonateurs à noyau central, on aura intérêt à privilégier les modes d'ordre faible, notamment k = 2, afin que le produit 4k soit petit.

Outre les avantages précités recueillis grâce à la mise en oeuvre d'un résonateur mécanique monolithique de type planaire sensible selon un axe transverse (axe Z) conformément à l'invention, un avantage supplémentaire réside dans la possibilité de combiner fonctionnellement un tel résonateur conforme à l'invention avec un résonateur de type planaire sensible selon un axe (X ou Y) ou selon deux axes (X, Y) contenu(s) dans le plan de la structure vibrante de manière à obtenir un résonateur monolithique plan sensible selon deux axes (X, Z ou Y, Z) ou selon trois axes (X, Y, Z). En particulier, il est possible de concevoir que le résonateur mécanique agencé comme indiqué au paragraphe précédent soit combiné avec un résonateur mécanique à poutres résonantes qui sont portées par un noyau central sensiblement concentrique à la structure vibrante à contour fermé et qui rayonnent autour dudit noyau central sensiblement dans le plan de la structure vibrante à contour fermé, tel que le résonateur à poutres résonantes décrit dans le document précité FR-A-2 741 150, ce grâce à quoi le dispositif gyrométrique ou gyroscopique a tous ses éléments vibrants situés sensiblement dans un même plan (possibilité de réalisation monolithique) et est propre à détecter les trois composantes $\Omega x$, $\Omega y$ et $\Omega z$ d'une vitesse de rotation $\Omega$ imprimée au socle, les composantes $\Omega x$ et $\Omega y$ étant détectées par les poutres résonantes et la composante $\Omega z$ étant détectée par la structure vibrante à contour fermé.

Ainsi, grâce aux dispositions conformes à l'invention, il est possible, en choisissant de façon appropriée les paramètres des résonateurs, de constituer un résonateur monolithique plan capable de fournir des mesures sur trois axes mutuellement orthogonaux, les axes (X, Y) situés dans le plan du résonateur étant limités au mode de fonctionnement gyrométrique et l'axe orthogonal (Z) donnant accès au mode de fonctionnement gyroscopique. On répond ainsi, dans le cadre de la présente invention, à d'autres requêtes des utilisateurs.

D'une façon encore plus générale, le résonateur monolithique de type planaire conforme à l'invention peut être intégré dans une structure monolithique plan d'application beaucoup plus vaste regroupant une pluralité de capteurs plans de types divers, non seulement des capteurs gyrométriques et/ou gyroscopiques, mais aussi des capteurs de pression, de température, .... En particulier, l'invention permet de réaliser une structure monolithique intégrée plan, propre à assurer une fonction de détection accélérométrique par rapport à trois axes orthogonaux et une fonction de détection gyroscopique par rapport à trois axes orthogonaux, une telle structure constituant un cœur de centrale inertielle monolithique intégrée de type planaire.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :

- les figures 1A à 1C illustrent schématiquement respectivement trois variantes de réalisation possibles d'un résonateur à contour fermé polygonal isotrope en géométrie et à suspension intérieure, conformément à l'invention ;
- les figures 2A et 2B illustrent schématiquement respectivement deux variantes de réalisation possibles d'un résonateur à contour fermé polygonal isotrope en géométrie à suspension extérieure, conformément à l'invention ;
- les figures 3A à 3F illustrent schématiquement diverses variantes de réalisation possibles d'un résonateur à contour fermé polygonal isotrope en suspension ou dont l'anisotropie en suspension est compensée par des moyens extérieurs, conformément à l'invention ;
- les figures 4A et 4B illustrent schématiquement deux variantes d'implantation de masses additionnelles dans un résonateur à contour fermé polygonal, conformément à l'invention ;
- les figures 5A à 5C illustrent schématiquement trois variantes de réalisation possibles d'un résonateur à contour fermé polygonal isotrope en matériau ou compensé pour être rendu isotrope, conformément à l'invention ;
- les figures 6A et 6B illustrent schématiquement deux exemples de réalisation d'un résonateur plan sensible selon trois axes orthogonaux, conformément à l'invention ; et
- la figure 7 est une vue schématique de dessus d'un senseur inertiel plan, monolithique, gyro-accélérométrique en X, Y et Z incorporant un résonateur accélérométrique sensible selon l'axe transverse Z conforme à l'invention.

On rappellera tout d'abord que, comme exposé plus haut, quel que soit l'ordre k des modes vibratoires utilisés, on peut de manière générale décomposer l'anisotropie de fréquence ainsi que l'anisotropie de coefficient de couplage du résonateur mécanique en trois termes :

$$\Delta f = \Delta f_m + \Delta f_g + \Delta f_s$$

et

$$\Delta \alpha = \Delta \alpha_m + \Delta \alpha_g + \Delta \alpha_s$$

où les indices m, g et s indiquent comme origine du défaut le matériau, la géométrie et la suspension du résonateur. Ainsi, pour que les anisotropies $\Delta f$ et $\Delta \alpha$ soient nulles, il est suffisant que chacun des termes de ces deux relations soit nul ou que les sommes algébriques $\Delta f_m + \Delta f_g + \Delta f_s$ et $\Delta \alpha_m + \Delta \alpha_g + \Delta \alpha_s$ soient nulles.

Par ailleurs, en ce qui concerne les conditions d'équilibre mécanique, il est établi que, pour les modes d'ordre k, les défauts d'ordre k - 1 et k + 1 créent une sensibilité aux excitations transverses et les défauts d'ordre k créent une sensibilité aux accélérations angulaires axiales. Toutefois, pour les environnements opérationnels usuels, l'erreur introduite par les accélérations angulaires axiales est négligeable dans la mesure où ces accélérations angulaires sont petites devant les accélérations linéaires et sont pondérées par les faibles dimensions des résonateurs. Dans ces conditions, les défauts d'ordre k peuvent ne pas être pris en considération.

C'est sur ces bases que repose la conception du résonateur mécanique conforme à l'invention, selon les modalités qui suivent qui sont exposées successivement en relation avec la géométrie, avec la suspension et avec le choix du matériau (et de son plan de coupe) du résonateur mécanique de l'invention.

Conformément à l'invention, un résonateur mécanique à structure vibrante monolithique plane s'étendant selon un contour fermé dont l'axe de sensibilité est sensiblement perpendiculaire au plan de ladite structure, est tel que la structure plane est polygonale régulière convexe à 4k sommets (k étant l'ordre du mode vibratoire mis en oeuvre lorsque le résonateur est mis en vibration) et est suspendue à un socle fixe par l'intermédiaire de n bras de suspension d'étendue sensiblement radiale disposés sensiblement symétriquement.

Pour ce qui concerne tout d'abord la géométrie du résonateur, l'obtention d'une isotropie totale de géométrie du résonateur (c'est-à-dire d'une anisotropie de géométrie qui soit nulle : $\Delta f_g = 0$ et $\Delta \alpha_g = 0$ ) est le résultat de la mise en oeuvre de la susdite structure vibrante plane polygonale à 4k sommets, complètement invariante par rotation autour d'un axe central transverse, orthogonal au plan de la structure (axe Z), dans laquelle le même motif se répète avec un écart angulaire de π/2*k*. Un résonateur mécanique ayant une telle forme ne présente aucun défaut d'ordre k - 1, k + 1 et k.

Par exemple, dans le cas relativement courant d'un résonateur mécanique exploité sur le mode d'ordre 2 (k = 2), le résonateur est isotrope en géométrie s'il a la forme d'un octogone régulier plan et il est sensible aux rotations autour de l'axe central transverse (axe Z) : un tel résonateur se comporte comme un résonateur en anneau dont il est connu qu'il est intrinsèquement isotrope en géométrie.

De la même manière, dans le cas également courant d'un résonateur mécanique exploité sur le mode d'ordre k (k = 3), le résonateur est isotrope en géométrie s'il a la forme d'un dodécagone régulier.

Par contre, un résonateur de forme carrée que l'on rencontre dans l'état de la technique ne peut pas présenter une anisotropie en géométrie qui soit nulle et ne peut donc pas répondre aux exigences requises dans le cadre de la présente invention.

Ainsi, l'invention conduit à une nouvelle famille de résonateurs mécaniques plans dont les déformées sont contenues dans le plan du résonateur : il s'agit des résonateurs mécaniques en forme de polygones réguliers convexes ayant 4k sommets pour $k \geq 2$, pour lesquels l'axe sensible (axe Z) est orthogonal au plan du résonateur.

Pour ce qui concerne maintenant la suspension du résonateur mécanique, la suspension recherchée doit être suffisamment souple pour remplir un rôle de filtrage vis à vis des vibrations transmises au point d'attache du résonateur lorsque celui-ci présente un déséquilibre, par exemple du fait des imprécisions d'usinage. En revanche ce dispositif ne doit pas être trop souple pour éviter que les modes de résonance soient trop bas en fréquence et puissent être excités par l'environnement opérationnel du capteur.

Le dispositif le plus naturel qui répond à ces exigences fait appel à plusieurs bras de suspension au nombre de n = 4k. Ces bras sont tous identiques, uniformément répartis avec des intervalles angulaires de π/2*k* ; ils sont reliés, d'un côté, au résonateur et, de l'autre côté, à un point d'attache fixe, solidaire d'un socle ou boîtier extérieur. Dans ce dernier cas, le point d'attache peut être situé centralement au résonateur (pivot central ou noyau central), les bras de suspension s'étendant alors à l'intérieur du contour fermé du résonateur, ou bien le point d'attache est situé extérieurement au résonateur (par exemple socle entourant le résonateur), les bras de suspension s'étendant alors à l'extérieur du contour fermé du résonateur.

Quelle que soit la solution retenue, les bras ont une étendue généralement radiale, étant admis que leur forme exacte s'écarte du simple rayon rectiligne et peut présenter une configuration complexe pour que puissent être réunies les caractéristiques notamment de filtrage et de raideur précitées. L'homme du métier connaît diverses configurations propres à satisfaire ces exigences.

Dans le cas conforme à l'invention où le résonateur est polygonal convexe régulier avec 4k sommets et 4k bras de suspension, les points de fixation sont situés là où les vibrations résiduelles sont suffisamment faibles, c'est-à-dire aux sommets ou aux milieux des côtés de la structure polygonale.

Un tel dispositif ne présente aucun défaut d'ordre k - 1, k + 1 et k.

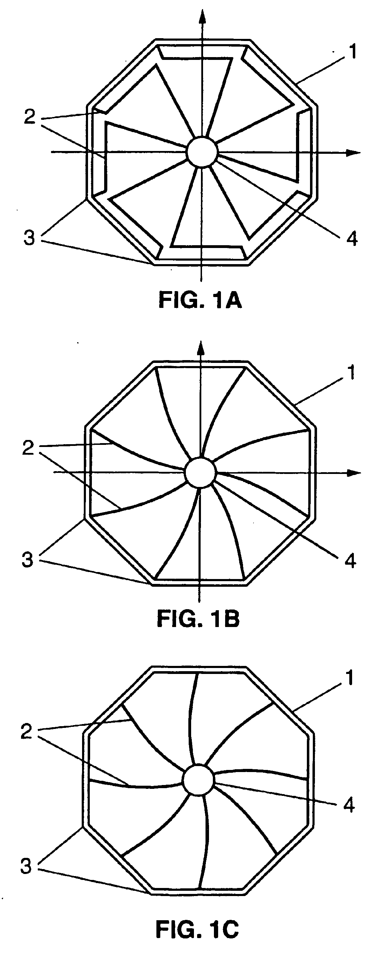

Pour fixer les idées, on a illustré, à titre d'exemple, à la figure 1A un résonateur mécanique à structure vibrante 1 de forme polygonale convexe régulière octogonale (pour k = 2), munie de huit bras de suspension 2 situés intérieurement et s'étendant entre les sommets 3 de la structure octogonale 1 et un noyau (ou pivot) central 4. Pour que la suspension présente la souplesse requise, les bras 3, bien que d'étendue générale approximativement radiale, possèdent une conformation approximativement en Z.

A la figure 1B, le résonateur à structure vibrante octogonale est suspendu à l'aide de huit bras intérieurs 2 qui présentent une étendue radiale quasi rectiligne, en étant toutefois légèrement incurvés afin de ne pas conférer une raideur trop élevée (effet de filtrage mécanique des vibrations auxquelles peut être soumis le socle).

Les bras en Z du résonateur de la figure 1A, qui confèrent une souplesse plus élevée, peuvent avoir une section plus grande que les bras de la figure 1B qui, pour ne pas raidir le cadre extérieur 1, doivent être fins. Ce point sera particulièrement important pour la réalisation des pistes conductrices reliant les électrodes d'excitation et de détection situées sur le résonateur à l'électronique de traitement du signal. Toutefois, le nombre de bras étant égal à 4k et donc relativement élevé, l'espace occupé par ces bras est nécessairement important, et cela d'autant plus que l'ordre des modes est élevé, ce qui laisse peu de possibilité pour optimiser la raideur de ces bras. De ce point de vue, on privilégiera des modes d'ordre faible, par exemple d'ordre 2, pour que le produit 4k, et donc le nombre des bras, soit petit.

Bien entendu, comme indiqué plus haut, les bras 2 peuvent être raccordés à la structure polygonale non pas sur les sommets de celle-ci comme illustré aux figures 1A et 1B, mais aux milieux des côtés comme illustré à titre d'exemple à la figure 1C.

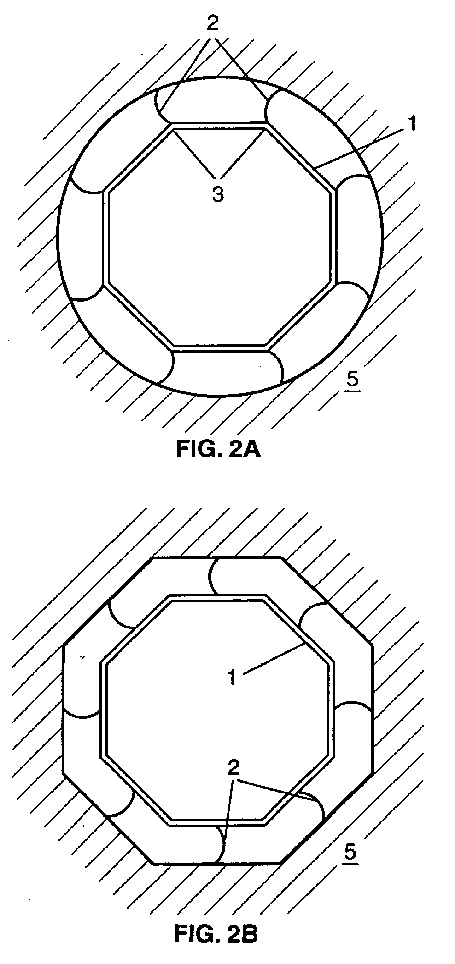

De même, les bras de suspension peuvent être extérieurs à la structure polygonale comme illustré à titre d'exemple aux figures 2A et 2B, en étant interposés entre la structure vibrante polygonale 1 et un socle 5 entourant la structure vibrante 1, ledit socle 5 pouvant être notamment circulaire (figure 2A, avec par exemple les bras 2 partant des sommets de la structure vibrante 1) ou polygonal (figure 2B, avec par exemple les bras reliant les milieux respectifs des deux contours polygonaux concentriques).

Pour ce qui est enfin du matériau constitutif du résonateur mécanique, les anisotropies de fréquence et de couplage gyroscopique seront nulles si le matériau utilisé est naturellement isotrope. Or les cristaux de silicium et de quartz, du fait de leur nature cristalline, sont anisotropes. Il s'agit là d'un problème important car ces deux matériaux cristallins se prêtent naturellement aux micro-usinages par gravure chimique comme cela est pratiqué avec les procédés collectifs de la micro électronique. De plus, ces matériaux cristallins possèdent de nombreux autres avantages, comme par exemple leurs pertes internes réduites et donc leurs coefficients de qualité élevés, et, pour le quartz, du fait de son caractère piézo-électrique, des possibilités d'excitation et de détection des modes de résonance.

En conséquence, il n'est pas possible d'exclure l'emploi de ces matériaux cristallins sous le prétexte de la recherche d'une anisotropie en matériau qui soit nulle.

Toutefois, pour les géométries de résonateur décrites plus haut en forme d'anneau ou de polygone régulier convexe à 4k sommets, d'autres solutions peuvent être trouvées pour réduire l'importance de l'anisotropie de matériau, voire pour obtenir une anisotropie nulle.

Une solution peut être trouvée là où l'ordre k des modes utilisés peut se combiner à la symétrie du matériau et à la condition que le plan de coupe du cristal soit correctement choisi. Ainsi, on constate que ces géométries sont isotropes pour l'ordre 2 dans le quartz et pour l'ordre 3 dans le silicium : cette propriété résulte de la structure particulière des matrices de rigidité de ces matériaux. D'un point de vue général, pour ce qui concerne le matériau, un résonateur en forme polygone régulier convexe à 4k sommets est naturellement isotrope en fréquence et coefficient de couplage pour les modes d'ordre 2 (résonateur de forme octogonale) si le matériau a une structure trigonale (par exemple quartz) avec un plan de coupe du matériau situé dans le plan OXY et pour les modes d'ordre 3 (résonateur de forme dodécagonale) si le matériau a une structure cubique (par exemple silicium) avec un plan de coupe du matériau contenant l'axe OX, ou l'axe OY, ou l'axe OZ. L'ordre 2 étant de mise en oeuvre moins complexe qu'un ordre supérieur, on réalisera préférentiellement un octogone régulier convexe en quartz qui sera alors intrinsèquement isotrope ($\Delta f_m = 0$, $\Delta\alpha_m = 0$).

De façon préférée, on peut constituer une structure vibrante qui réunisse simultanément les trois dispositions qui viennent d'être exposées : une telle structure présente alors une isotropie de géométrie ($\Delta f_g = 0$, $\Delta\alpha_g = 0$), et une isotropie de suspension ($\Delta f_s = 0$, $\Delta\alpha_s = 0$), et une isotropie de matériau ($\Delta f_m = 0$, $\Delta\alpha_m = 0$). Etant de principe totalement isotrope ($\Delta f = 0$, $\Delta\alpha = 0$), cette structure est propre à fonctionner en mode gyroscopique, aussi bien qu'en mode gyrométrique.

Toutefois, l'obtention simultanée des trois isotropies de géométrie, de suspension et de matériau peut s'avérer impossible. Dans ce cas, on peut envisager de compenser une anisotropie d'un type spécifique en introduisant volontairement une anisotropie d'un autre type propre, par ses effets, à compenser les effets de la première anisotropie mentionnée. Dans ce cas, si la structure est isotrope pour le troisième type, cette structure présentera alors une isotropie d'ensemble. Par exemple, si elle est anisotrope en suspension ($\Delta f_s \neq 0$, $\Delta\alpha_s \neq 0$), on peut introduire volontairement une anisotropie de géométrie ($\Delta f_g \neq 0$, $\Delta\alpha_g \neq 0$) telle que $\Delta f_s + \Delta f_g = 0$ et $\Delta\alpha_s + \Delta\alpha_g = 0$ ; si par ailleurs la structure est isotrope en matériau ($\Delta f_m = 0$, $\Delta\alpha_m = 0$), on obtient effectivement $\Delta f = 0$, $\Delta\alpha = 0$ : la structure est isotrope et peut être utilisée en mode gyroscopique.

Des exemples spécifiques vont maintenant être donnés.

Pour remédier aux difficultés de mise en place du nombre de bras requis pour l'obtention de l'isotropie de suspension, en particulier dans le cas de bras intérieurs (manque de place disponible), on peut être amené à rechercher d'autres possibilités pour lesquelles le nombre de bras est inférieur à 4k. Mais alors les bras de suspension introduisent un défaut dont l'ordre, s'il est mal choisi, peut malencontreusement coïncider avec un défaut d'anisotropie de fréquence, si l'ordre du défaut est un multiple entier de k, ou avec un défaut d'isolement mécanique, si l'ordre du défaut est égal à $k \pm 1$.

Lorsque les bras sont en nombre n̲ inférieur à 4k (n < 4k) et sont séparés par des intervalles angulaires de $2\pi/n$, on introduit un défaut de raideur d'ordre n̲. A partir de là, les cas acceptables correspondent à $n \leq k - 2$ et $n \geq k + 2$ avec $n \neq pk$, où p est un nombre entier ($p \in \mathbb{N}$), ou bien $n = pk$. Dans ce dernier cas, l'anisotropie de fréquence qui apparaît peut facilement être compensée en introduisant volontairement un défaut en masse d'ordre 2k : la quantité $\sqrt{k/m}$ homogène à une fréquence est alors maintenue constante sur le contour fermé par ajout de masses m̲ identiques tous les $\pi/k$, avec un maximum de masses placées au niveau des encastrements des bras avec le résonateur. Une compensation par un défaut en masse d'ordre k (enlèvement de matière) aurait été également envisageable, mais dans ce cas la sensibilité du résonateur aux accélérations angulaires selon son axe sensible augmenterait : cette solution est donc écartée.

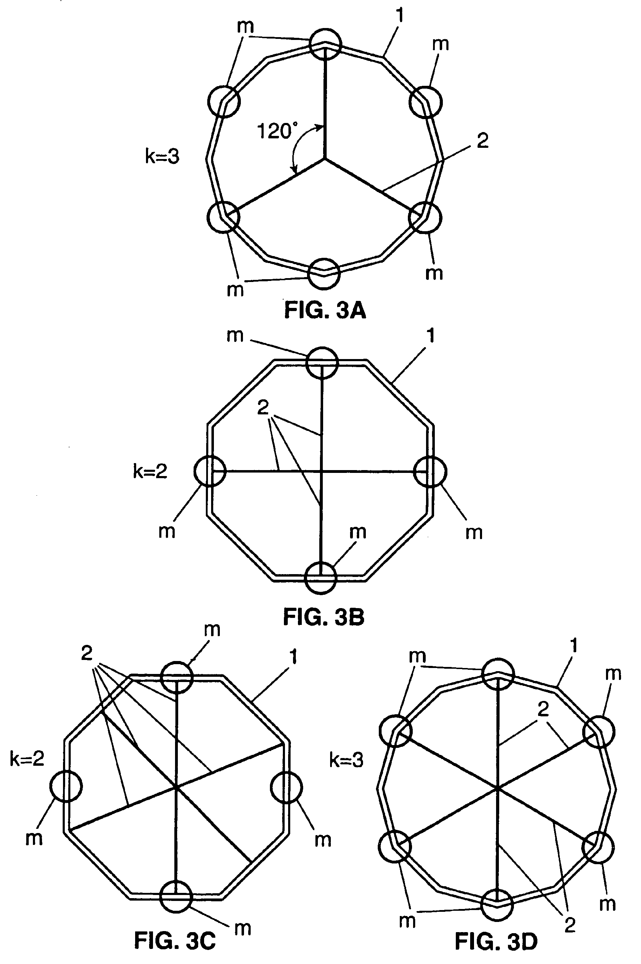

A titre d'exemple, un dispositif à trois bras identiques répartis tous les 120° est isotrope en fréquence et ne déséquilibre pas le résonateur si le mode utilisé est d'ordre 1 ou 5. Par contre, pour un fonctionnement du dispositif sur un mode d'ordre 3 (k = 3) conduisant à une structure dodécagonale, il est nécessaire, pour conserver l'isotropie, de prévoir l'ajout de trois masses m̲ aux encastrements des bras 2 avec la structure vibrante 1 et trois masses supplémentaires m̲ à mi-distance de deux encastrements successifs, les masses étant séparées angulairement de $\pi/3$ (figure 3A).

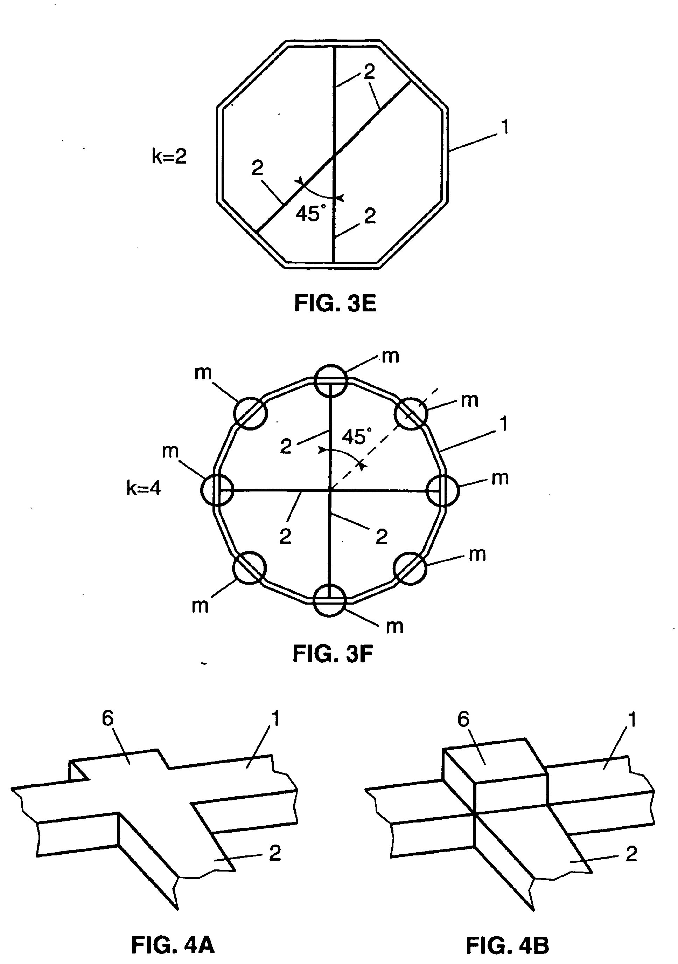

De même, un dispositif à quatre bras identiques répartis tous les 90° est isotrope en fréquence et ne déséquilibre pas le résonateur si le mode utilisé est d'ordre 6. Mais pour un ordre 2 (structure octogonale), il est nécessaire de prévoir quatre masses m̲ ajoutées aux encastrements des bras (figure 3B) . Pour k = 4 (structure polygonale à 16 côtés), il faut en outre prévoir quatre masses m supplémentaires décalées de 45° par rapport aux masses m des encastrements (figure 3F).

Toujours à titre d'exemple, un dispositif à six bras identiques répartis tous les 60° est isotrope en fréquence et ne déséquilibre pas le résonateur si le mode utilisé est d'ordre 4. Mais pour fonctionner sur un mode d'ordre 2 (structure octogonale), quatre masses m doivent être ajoutées tous les 90° (figure 3C) ; pour l'ordre 3 (structure dodécagonale), six masses m doivent être ajoutées aux encastrements des bras tous les 60° (figure 3D).

Si maintenant le nombre n de bras est inférieur à 4k alors que ces bras font entre eux un angle différent de $2\pi/n$, le défaut introduit est un défaut de raideur ayant tous les harmoniques 1, 2, 3 .... Dans ce cas, les solutions doivent être étudiées au cas par cas selon l'ordre du mode utilisé. Ainsi, pour k = 2 (structure octogonale), une solution consiste à créer un défaut de raideur d'harmonique 2 et 4, ces deux défauts s'annulant sur le plan de l'anisotropie de fréquence. Pour cela on dispose quatre bras à 45°-135° (figure 3E). Pour k = 4 (non illustrée), la même configuration à quatre bras peut également convenir.

D'un point de vue pratique, l'ajout de masse est obtenu en prévoyant, sur la structure fermée polygonale, une excroissance ou saillie 6 qui peut être soit radiale (figure 4A), soit axiale ou en marche d'escalier (figure 4B) . Le choix se fait en fonction de la place disponible radialement ou axialement. La réalisation de telles excroissances peut facilement être intégrée à la configuration du résonateur et ne gêne en rien le déroulement du processus de fabrication (gravure chimique, gravure au laser, ...) .

En résumé, les suspensions à trois ou quatre bras sont isotropes et respectent l'équilibre mécanique de la structure. Ces suspensions peuvent être appliquées avec avantage aux résonateurs en forme de polygone régulier convexe à 4k sommets. En particulier, les modes d'ordre 2 conviennent à une suspension par quatre bras, et les modes d'ordre 3 conviennent à une suspension par trois bras selon la conformation illustrée à la figure 3A.

De même, on peut rechercher une compensation des anisotropies du matériau en introduisant volontairement, une anisotropie de géométrie et/ou de suspension, par exemple en modifiant localement la forme du résonateur polygonal et/ou des bras de suspension (cette dernière disposition s'inspirant des remarques déjà faites plus haut sur les suspensions), de telle façon que l'anisotropie de géométrie et/ou de suspension agisse de manière à compenser l'anisotropie de matériau.

Autrement dit, la structure vibrante polygonale à 4k sommets est constituée en un matériau cristallin à structure non trigonale pour k = 2 ou non cubique pour k = 3, et présente donc de principe une anisotropie de matériau ($\Delta f_m \neq 0$, $\Delta\alpha_m \neq 0$ ) . Ladite structure vibrante polygonale est alors agencée pour présenter en outre au moins une modification localisée de géométrie et/ou la suspension présente au moins une modification localisée, de sorte que ladite structure vibrante polygonale présente une anisotropie de géométrie ($\Delta f_g \neq 0$, $\Delta\alpha_g \neq 0$) et/ou une anisotropie de suspension ($\Delta f_s \neq 0$, $\Delta\alpha_s \neq 0$), respectivement, propre à compenser l'anisotropie de matériau, ce grâce à quoi ladite structure vibrante polygonale présente une isotropie en fréquence ($\Delta f = 0$ ) et en couplage ($\Delta\alpha = 0$) et le résonateur est propre à fonctionner en mode gyrométrique ou en mode gyroscopique.

Par exemple, il est ainsi possible de rendre isotrope un résonateur en silicium ayant la géométrie requise selon l'invention et fonctionnant à l'ordre 2, en rajoutant quatre masses identiques et/ou en modifiant la raideur des bras comme indiqué plus haut à ce sujet. De même, il est également possible de faire fonctionner un résonateur en quartz conformé géométriquement selon l'invention et fonctionnant à l'ordre 3, en rajoutant six masses identiques et/ou en modifiant la raideur des bras comme indiqué plus haut.

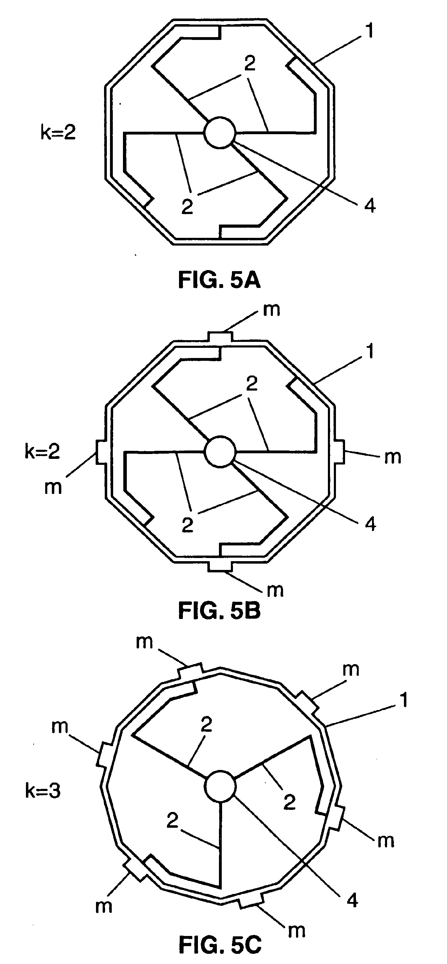

Sur les figures 5A à 5C sont illustrés quelques exemples de mise en oeuvre des dispositions de l'invention qui viennent d'être exposées.

A la figure 5A, le résonateur 1 devant fonctionner sur le mode d'ordre 2 (structure octogonale) est constitué en quartz et la suspension est constituée de quatre bras 2 approximativement en Z s'étendant entre un noyau central 4 et les milieux de quatre côtés respectifs deux à deux opposés et adjacents, ce qui confère une anisotropie de raideur d'ordres 2 et 4 compensant le nombre insuffisant de bras.

A la figure 5B, le même résonateur 1, avec les mêmes bras 2 disposés selon le même agencement, est constitué en silicium alors qu'il fonctionne sur le mode d'ordre 2 (structure octogonale). Pour compenser l'anisotropie de matériau, on introduit une anisotropie de masse d'ordre 4 en ajoutant quatre masses m écartées mutuellement de 90°, avec deux masses disposées aux encastrements de deux bras opposés (au milieu des côtés correspondants de l'octogone) et deux masses disposées aux milieux respectifs des deux côtés perpendiculaires aux précédents.

A la figure 5C est illustré un résonateur dodécagonal (k = 3) muni de seulement trois bras 2 en Z qui sont encastrés au milieu d'un côté sur quatre. Six masses m régulièrement réparties sont ajoutées au milieu d'un côté sur deux, trois d'entre elles étant disposées sur les encastrements des bras. Le résonateur peut être constitué aussi bien en silicium qu'en quartz, les masses m introduisant une anisotropie en masse compensant l'anisotropie de suspension (nombre insuffisant de bras) si le résonateur est en silicium et compensant l'anisotropie de suspension ainsi que l'anisotropie de matériau si le résonateur est en quartz.

Grâce aux dispositions qui viennent d'être exposées, il est possible de concevoir un résonateur plan polygonal qui, bien que présentant au moins une anisotropie de géométrie, ou une anisotropie de suspension, ou une anisotropie de matériau, peut être compensé pour être rendu isotrope ($\Delta f = 0$, $\Delta \alpha = 0$). Un tel résonateur est propre à fonctionner en mode gyroscopique aussi bien qu'en mode gyrométrique, de la même manière qu'un résonateur intrinsèquement isotrope comme envisagé plus haut. On satisfait ainsi le besoin des utilisateurs qui requéraient un dispositif gyroscopique plan sensible selon un axe transverse (OZ).

Le résonateur plan conforme à l'invention procure l'avantage supplémentaire, inhérent à sa structure plane transverse à son axe de sensibilité, de pouvoir être combiné avec une ou plusieurs autres structures vibrantes dont le ou les axes de sensibilité sont situés dans ce même plan, l'ensemble pouvant être fabriqué dans un même substrat en tant que dispositif plan monolithique sensible selon trois axes mutuellement orthogonaux.

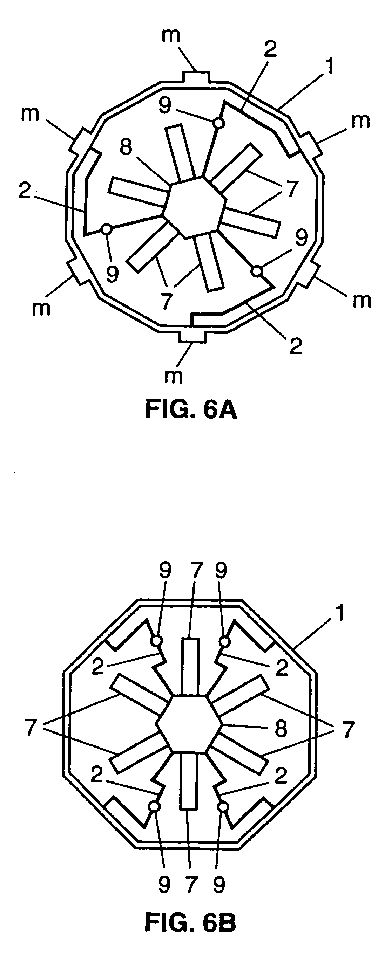

Un exemple tout particulièrement intéressant fait comprendre au résonateur plan de l'invention, sensible selon un axe transverse, également des poutres résonantes 7 qui sont portées par un noyau central 8 sensiblement concentrique à la structure vibrante polygonale 1 de l'invention (qui est illustrée à la figure 6A sous forme d'un polygone dodécagonal à trois bras 2 de suspension en Z, avec six masses compensatrices $\underline{m}$, conformément aux dispositions exposées en regard de la figure 5C). Les six poutres résonantes 7 rayonnent régulièrement autour du noyau central 8 en étant situées sensiblement dans le plan de la structure polygonale 1. La fixation de la structure polygonale dodécagonale 1 par trois bras 2 disposés à 120° les uns des autres est celle qui convient le mieux pour que ces bras s'insèrent entre les poutres résonantes 7 en étant solidaires du noyau central 8. La structure résonante 1, fonctionnant sur le mode d'ordre 3, peut indifféremment être réalisée en silicium ou en quartz, le silicium présentant toutefois l'intérêt de ne pas introduire d'anisotropie de fréquence.

La fixation de l'ensemble sur un socle fixe s'effectue en 9 sur chaque bras de suspension 2.

La structure vibrante à six poutres rayonnantes solidaires d'un socle fixe polygonal extérieur est connue du document FR-A-2 741 151 et constitue un résonateur mécanique plan sensible selon deux axes (X, Y) orthogonaux contenus dans le plan de la structure.

Grâce aux dispositions de l'invention, on constitue un résonateur mécanique plan, monolithique, qui est propre à détecter les trois composantes $\Omega x$, $\Omega y$ et $\Omega z$ d'une vitesse de rotation $\Omega$ imprimée au socle supportant le résonateur, les composantes $\Omega x$ et $\Omega y$ étant détectées par les poutres résonantes et la composante $\Omega z$ étant détectée par la structure vibrante à contour fermé en anneau ou polygonal. Ainsi le résonateur est propre à fonctionner en mode gyrométrique ou en mode gyroscopique sur les trois axes X, Y et Z mutuellement orthogonaux.

A la figure 6B est illustré un autre mode de réalisation d'un résonateur plan à trois axes de sensibilité propre à fonctionner sur un mode d'ordre 2 (k = 2). En application des dispositions de l'invention, la structure résonante à contour fermé 1 est un octogone. La suspension est assurée à l'aide de quatre bras 2 disposés entre la structure résonante octogonale 1 extérieure et le noyau 8 de la structure résonante en étoile 7 intérieure. Le relativement faible nombre de bras de suspension 2 est favorable compte tenu du peu de place disponible et permet de diminuer le nombre des électrodes propres à entretenir et à détecter la vibration de la structure octogonale. En revanche, la structure en étoile 7 est suspendue par l'intermédiaire de quatre bras, ce qui ne permet plus d'assurer la symétrie ternaire du mode de réalisation de la figure 6A.

Pour assurer les impératifs d'isotropie visés par l'invention, la meilleure solution consiste à placer deux poutres 7 opposées de la structure en étoile sur la bissectrice des paires de bras de suspension de la structure polygonale extérieure. Ainsi, l'angle le plus-petit entre les poutres en étoile et les bras de suspension de la structure polygonale est de 22,5°. En donnant aux bras de suspension un cheminement en Z, il est alors possible de les raccorder sur la bissectrice de deux poutres, ce qui ne perturbe pas l'équilibre de cette dernière structure. Le matériau utilisé sera préférentiellement du quartz, du fait de son isotropie en fréquence pour l'ordre k = 2.

La fixation de l'ensemble de la structure au socle de support est optimale avec quatre points d'attache 9 placés sur les bras de suspension 2, cette position permettant de trouver le meilleur compromis entre, d'une part, une fixation centrale pour la structure vibrante extérieure à contour polygonal et, d'autre part, une fixation aux extrémités du cadre pour la structure intérieure à poutres vibrantes 7 en étoile.

On obtient ainsi une structure sensible selon trois axes de mesure X, Y et Z, les axes situés dans le plan de la cellule étant limités au mode de fonctionnement gyrométrique et l'axe orthogonal donnant accès au mode de fonctionnement gyroscopique.

Bien entendu, le domaine d'application d'un résonateur conforme à l'invention n'est pas restreint à la réalisation d'un seul capteur sensible selon trois axes orthogonaux, et le résonateur plan selon l'invention ouvre la possibilité de regrouper sur un même substrat cristallin, silicium ou quartz notamment, une multiplicité de capteurs de grandeurs physiques diverses : certes variations angulaires selon des axes X, Y et Z, mais aussi accélération, température, pression, .... Tous ces capteurs peuvent être élaborés sur un même substrat plan cristallin monolithique, ce qui autorise la réalisation de dispositifs miniaturisés de très faible encombrement et propres à être fabriqués à moindre coût par des techniques connues de gravure chimique, gravure laser ou autres.

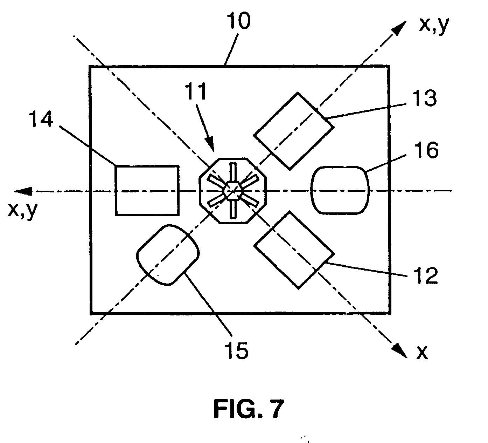

En particulier, il devient possible de fabriquer un senseur inertiel gyro-accélérométrique de type monolithique plan, regroupant sur la surface plane d'une même pastille les senseurs gyroscopiques en X, Y et Z et les senseurs accélérométriques en X, Y et Z. Un tel agencement est illustré de façon très schématique à la figure 7. Le substrat 10, en matériau cristallin approprié tel que silicium ou quartz largement utilisé pour de telles applications, incorpore un résonateur plan sensible en Z, agencé conformément à l'invention, ainsi qu'un résonateur plan sensible en X et en Y, c'est-à-dire dans le plan du résonateur, lequel peut être conforme aux enseignements du document FR-A-2 741 151 ; de façon plus avantageuse, ces deux résonateurs peuvent être combinés comme exposé plus haut en regard notamment des figures 6A et 6B sous forme d'un senseur unitaire plan 11 à mode de fonctionnement gyroscopique en X, Y et Z.

A ce senseur unitaire gyroscopique 11, on associe un senseur accélérométrique plan sensible en X et Y ou deux senseurs accélérométriques sensibles respectivement en X et en Y, en même temps qu'est prévu un senseur accélérométrique plan sensible selon l'axe transverse Z. De tels senseurs accélérométriques plans sont connus de l'homme du métier.

A titre d'exemple, on pourra mettre en oeuvre trois senseurs à sensibilité monodirectionnelle décalés angulairement de 120° les uns par rapport aux autres, l'un 12 étant sensible selon l'axe X et les deux autres 13, 14 étant sensibles en X, Y : un traitement différentiel des signaux de ces trois senseurs permet d'obtenir les composantes d'accélération $\gamma_x$ et $\gamma_y$. Des senseurs appropriés peuvent être du type décrit dans le document FR 00 10675.

De même, la composante d'accélération $\gamma_z$ peut être connue par mise en oeuvre différentielle de deux capteurs 15, 16 qui peuvent être du type décrit dans le document FR-A-2 685 964.

**Revendications**

1. Résonateur mécanique à structure vibrante monolithique plane s'étendant selon un contour fermé dont l'axe de sensibilité est sensiblement perpendiculaire au plan de ladite structure, **caractérisé en ce que** la structure plane (1) est polygonale régulière convexe à 4k sommets (3) (k étant l'ordre du mode vibratoire mis en oeuvre lorsque le résonateur est mis en vibration et k ≥ 2) et est suspendue à un socle fixe (4, 5) par l'intermédiaire de n bras de suspension (2) d'étendue sensiblement radiale disposés sensiblement symétriquement.

2. Résonateur mécanique selon la revendication 1, **caractérisé en ce que** la structure vibrante polygonale régulière convexe à 4k sommets possède des motifs identiques se répétant avec des intervalles angulaires de $\pi/2k$, ce grâce à quoi ladite structure vibrante polygonale présente une isotropie de géométrie ($\Delta f_g = 0$, $\Delta\alpha_g = 0$).

3. Résonateur mécanique selon la revendication 1 ou 2, **caractérisé en ce que**, pour un mode vibratoire d'ordre 2 (k = 2), la structure plane vibrante (1) est de forme octogonale et est constituée en un matériau cristallin à structure trigonale, avec une coupe faite dans le plan X, Y, ce grâce à quoi la structure vibrante présente une isotropie de matériau ($\Delta f_m = 0$, $\Delta\alpha_m = 0$) pour l'ordre 2.

4. Résonateur mécanique selon la revendication 3, **caractérisé en ce que** la structure vibrante octogonale est constituée en quartz.

5. Résonateur mécanique selon la revendication 1 ou 2, **caractérisé en ce que**, pour un mode vibratoire d'ordre 3 (k = 3), la structure plane vibrante (1) est de forme dodécagonale et est constituée en un matériau cristallin à structure cubique, avec une coupe faite dans un plan contenant l'axe X, ou l'axe Y, ou l'axe Z, ce grâce à quoi la structure vibrante présente une isotropie de matériau ($\Delta f_m = 0$, $\Delta\alpha_m = 0$) pour l'ordre 3 .

6. Résonateur mécanique selon la revendication 5, **caractérisé en ce que** la structure vibrante dodécagonale est constituée en silicium.

7. Résonateur mécanique selon l'une quelconque des revendications 1 à 6, **caractérisé en ce que** les bras de suspension (2) sont en nombre n = 4k et sont espacés angulairement d'un intervalle angulaire de $\pi/2k$, ce grâce à quoi la structure vibrante présente une isotropie de suspension ($\Delta f_s = 0$, $\Delta\alpha_s = 0$ ).

8. Résonateur mécanique selon la revendication 2 et selon l'une quelconque des revendications 3 à 6 et selon la revendication 7, **caractérisé en ce que** la structure vibrante polygonale (1) présente simultanément des isotropies de géométrie ($\Delta f_g = 0$, $\Delta\alpha_g = 0$), et de matériau ($\Delta f_m = 0$, $\Delta\alpha_m = 0$) et de suspension ($\Delta f_s = 0$, $\Delta\alpha_s = 0$ ), en fréquence et en couplage, ce grâce à quoi il est propre à fonctionner en mode gyrométrique ou en mode gyroscopique.

9. Résonateur mécanique selon la revendication 1, **caractérisé en ce que** la structure vibrante polygonale à 4k sommets (1) est constituée en un matériau cristallin à structure non trigonale pour k = 2 ou non cubique pour k = 3, et présente donc de principe une anisotropie de matériau ($\Delta f_m \neq 0$, $\Delta\alpha_m \neq 0$ ) , et **en ce que** ladite structure vibrante polygonale (1) est alors agencée pour présenter en outre au moins une modification localisée de géométrie et/ou que la suspension présente au moins une modification localisée, de sorte que ladite structure vibrante polygonale présente une anisotropie de géométrie ($\Delta f_g \neq 0$, $\Delta\alpha_g \neq 0$) et/ou une anisotropie de suspension ($\Delta f_s \neq 0$, $\Delta\alpha_s \neq 0$), respectivement, propre à compenser l'anisotropie de matériau,

ce grâce à quoi ladite structure vibrante polygonale présente une isotropie en fréquence ($\Delta f = 0$) et en couplage ($\Delta\alpha = 0$) et le résonateur est propre à fonctionner en mode gyrométrique ou en mode gyroscopique.

10. Résonateur mécanique selon la revendication 1, **caractérisé en ce que** les bras de suspension (2) sont en nombre n < 4k et sont espacés angulairement d'un intervalle angulaire de $2\pi/n$, avec n choisi tel que $n \leq k - 2$ ou $n \geq k + 2$ avec n $\neq$ pk (p nombre entier), la structure vibrante polygonale présentant donc de principe une anisotropie de suspension ($\Delta f_s, \neq 0$, $\Delta\alpha_s \neq 0$) et **en ce que** ladite structure vibrante polygonale (1) est alors agencée pour présenter en outre des défauts localisés de géométrie écartés angulairement les uns des autres d'une valeur angulaire de $\pi/k$ et aptes à provoquer un défaut de masse d'ordre 2k qui entraîne une anisotropie en géométrie ($\Delta f_g \neq 0$, $\Delta\alpha_g \neq 0$) propre à compenser l'anisotropie de suspension due au nombre insuffisant des bras de suspension,

ce grâce à quoi ladite structure vibrante polygonale présente une isotropie en fréquence ($\Delta f = 0$) et en couplage ($\Delta\alpha = 0$) et le résonateur est propre à fonctionner en mode gyrométrique ou en mode gyroscopique.

11. Résonateur mécanique selon la revendication 10, **caractérisé en ce que** les défauts localisés de géométrie sont situés au moins au niveau des liaisons des bras de suspension (2) avec la structure vibrante (1).

12. Résonateur mécanique selon l'une quelconque des revendications 2 à 8, **caractérisé en ce que** la structure vibrante (1) présente au moins une anisotropie de géométrie ($\Delta f_g \neq 0$, $\Delta\alpha_g \neq 0$), ou de matériau ($\Delta f_m \neq 0$, $\Delta\alpha_m \neq 0$), ou de suspension ($\Delta f_s \neq 0$, $\Delta\alpha_s \neq 0$), ce grâce à quoi il est propre à fonctionner seulement en mode gyrométrique.

13. Résonateur mécanique selon l'une quelconque des revendications précédentes, **caractérisé en ce que** le socle (5) entoure la structure plane vibrante (1) et **en ce que** les bras de suspension (2) sont extérieurs à la structure vibrante (1).

14. Résonateur mécanique selon l'une quelconque des revendications 1 à 11, **caractérisé en ce que** le socle est un noyau central (4) sensiblement concentrique à la structure vibrante (1) et **en ce que** les bras de suspension (2) sont intérieurs à la structure vibrante (1).

15. Résonateur mécanique selon la revendication 13 ou 14, **caractérisé en ce qu'**il comprend en outre des poutres résonantes (7) qui sont portées par un noyau central (8) sensiblement concentrique à la structure vibrante (1) à contour fermé et qui rayonnent autour dudit noyau central (8) sensiblement dans le plan de la structure vibrante à contour fermé (1),

ce grâce à quoi le résonateur mécanique a tous ses éléments vibrants (1, 7) situés sensiblement dans un même plan et est propre à détecter les trois composantes $\Omega x$, $\Omega y$ et $\Omega z$ d'une vitesse de rotation $\Omega$ imprimée au socle, les composantes $\Omega x$ et $\Omega y$ étant détectées par les poutres résonantes et la composante $\Omega z$ étant détectée par la structure vibrante à contour fermé et ce grâce à quoi le résonateur mécanique est propre à fonctionner en mode gyrométrique ou en mode gyroscopique sur les trois axes.

16. Utilisation d'un résonateur mécanique plan sensible selon l'axe transverse à fonctionnement en mode gyroscopique selon l'une quelconque des revendications 11 à 14, au sein d'un senseur inertiel gyro-accélérométrique plan monolithique propre à fournir les informations $\Omega x$, $\Omega y$, $\Omega z$ et $\gamma_x$, $\gamma_y$, $\gamma_z$.

## Claims

1. A mechanical resonator with a plane monolithic vibrating structure extending along a closed contour whose sensitivity axis is substantially perpendicular to the plane of said structure,

**characterized in that** the plane structure (1) is convex regular polygonal with 4k vertices (3) (k being the order of the vibratory mode implemented when the resonator is caused to vibrate, and k $\geq$ 2) and is suspended from a fixed base (4, 5) by way of n suspension arms (2) of substantially radial extension which are arranged substantially symmetrically.

2. The mechanical resonator as claimed in claim 1, **characterized in that** the convex regular polygonal vibrating structure with 4k vertices has identical patterns which repeat with angular intervals of n/2k, whereby said polygonal vibrating structure has an isotropy of geometry ($\Delta f_g = 0$, $\Delta\alpha_g = 0$).

3. The mechanical resonator as claimed in claim 1 or 2, **characterized in that**, for a vibratory mode of order 2 (k = 2), the plane vibrating structure (1) has an octagonal shape and is made of a crystalline material having a trigonal structure, being cut in the X, Y plane, whereby the vibrating structure has an isotropy of material ($\Delta f_m = 0$, $\Delta\alpha_m = 0$) for order 2.

4. The mechanical resonator as claimed in claim 3, **characterized in that** the octagonal vibrating structure is made of quartz.

5. The mechanical resonator as claimed in claim 1 or 2, **characterized in that**, for a vibratory mode of order 3 (k = 3), the plane vibrating structure (1) has a dodecagonal shape and is made of a crystalline material having a cubic structure, being cut in a plane containing the X axis, or the Y axis, or the Z axis, whereby the vibrating structure has an isotropy of material ($\Delta f_m = 0$, $\Delta \alpha_m = 0$) for order 3.

6. The mechanical resonator as claimed in claim 5, **characterized in that** the dodecagonal vibrating structure is made of silicon.

7. The mechanical resonator as claimed in any one of claims 1 to 6, **characterized in that** the suspension arms (2) are n = 4k in number and are angularly spaced by an angular interval of n/2k, whereby the vibrating structure has an isotropy of suspension ($\Delta f_s = 0$, $\Delta \alpha_s = 0$).

8. The mechanical resonator as claimed in claim 2 and as claimed in any one of claims 3 to 6 and as claimed in claim 7, **characterized in that** the polygonal vibrating structure (1) simultaneously has isotropies of geometry ($\Delta f_g = 0$, $\Delta \alpha_g = 0$) and of material ($\Delta f_m = 0$, $\Delta \alpha_m = 0$) and of suspension ($\Delta f_s = 0$, $\Delta \alpha_s = 0$), in terms of frequency and coupling, whereby it is able to operate in gyrometric mode or in gyroscopic mode.

9. The mechanical resonator as claimed in claim 1, **characterized in that** the polygonal vibrating structure with 4k vertices (1) is made of a crystalline material having a non trigonal structure for k = 2 or a non cubic structure for k = 3, and therefore has basically an anisotropy of material ($\Delta f_m \neq 0$, $\Delta \alpha_m \neq 0$), and **in that** said polygonal vibrating structure (1) is arranged so as furthermore to have at least one localized modification of geometry and/or that the suspension has at least one localized modification, so that said polygonal vibrating structure has an anisotropy of geometry ($\Delta f_g \neq 0$, $\Delta \alpha_g \neq 0$) and/or an anisotropy of suspension ($\Delta f_s \neq 0$, $\Delta \alpha_s \neq 0$), respectively, able to compensate for the anisotropy of material, whereby said polygonal vibrating structure has an isotropy of frequency ($\Delta f = 0$) and of coupling ($\Delta \alpha = 0$) and the resonator is able to operate in gyrometric mode or in gyroscopic mode.

10. The mechanical resonator as claimed in claim 1, **characterized in that** the suspension arms (2) are n < 4k in number and are angularly spaced by an angular interval of 2n/n, with n chosen such that n ≤ k-2 or n ≥ k+2 with n ≠ pk (p integer), the polygonal vibrating structure therefore having basically an anisotropy of suspension ($\Delta f_s \neq 0$, $\Delta \alpha_s \neq 0$), and **in that** said polygonal vibrating structure (1) is arranged so as to furthermore have localized defects of geometry which are angularly offset from one another by an angular value of n/k and are able to cause a defect of mass of order 2k which generates an anisotropy of geometry ($\Delta f_g \neq 0$, $\Delta \alpha_g \neq 0$) able to compensate for the anisotropy of suspension due to the insufficient number of suspension arms, whereby said polygonal vibrating structure has an isotropy of frequency ($\Delta f = 0$) and coupling ($\Delta \alpha = 0$) and the resonator is able to operate in gyrometric mode or in gyroscopic mode.

11. The mechanical resonator as claimed in claim 10, **characterized in that** the localized defects of geometry are located at least in the vicinity of connections of the suspension arms (2) with the vibrating structure (1).

12. The mechanical resonator as claimed in any one of claims 2 to 8, **characterized in that** the vibrating structure (1) has at least one anisotropy of geometry ($\Delta f_g \neq 0$, $\Delta \alpha_g \neq 0$), or of material ($\Delta f_m \neq 0$, $\Delta \alpha_m \neq 0$), or of suspension ($\Delta f_s \neq 0$, $\Delta \alpha_s \neq 0$), whereby it is able to operate only in gyrometric mode.

13. The mechanical resonator as claimed in any one of the preceding claims, **characterized in that** the base (5) surrounds the plane vibrating structure (1) and **in that** the suspension arms (2) are outside the vibrating structure (1).

14. The mechanical resonator as claimed in any one of claims 1 to 11, **characterized in that** the base is a central hub (4) substantially concentric with the vibrating structure (1) and **in that** the suspension arms (2) are inside the vibrating structure (1).

15. The mechanical resonator as claimed in claim 13 or 14, **characterized in that** it furthermore comprises resonating beams (7) which are carried by a central hub (8) substantially concentric with the closed contoured vibrating structure (1) and which radiate around said central hub (8) substantially in the plane of the closed contoured vibrating structure (1), whereby the mechanical resonator has all vibrating elements (1, 7) thereof which are located substantially in one and the same plane and is able to detect the three components $\Omega x$, $\Omega y$ and $\Omega z$ of a rotation speed $\Omega$ imparted to the base, the components $\Omega x$ and $\Omega y$ being detected by the resonating beams and the component $\Omega z$ being detected by the closed contoured vibrating structure and whereby the mechanical resonator is able to operate in gyrometric mode or in gyroscopic mode on the three axes.

16. The use of a plane mechanical resonator sensitive along the transverse axis with an operation in gyroscopic mode as claimed in any one of claims 11 to 14, within a plane monolithic gyro-accelerometric inertial sensor able to provide the information $\Omega x$, $\Omega y$,

$\Omega z$ and $\gamma_x$, $\gamma_y$, $\gamma_z$.

**Patentansprüche**

1.  Mechanischer Resonator mit ebener monolithischer schwingender Struktur, die sich entlang einer geschlossenen Kontur erstreckt, dessen Empfindlichkeitsachse im Wesentlichen lotrecht zur Ebene der Struktur ist, **dadurch gekennzeichnet, dass** die ebene Struktur (1) konvex regelmäßig polygonal mit 4k Eckpunkten (3)ist (wobei k die Ordnung des angewendeten Schwingungsmodus ist, wenn der Resonator in Schwingung versetzt wird, und k $\geq$ 2 gilt) und an einem festen Sockel (4, 5) über n Aufhängungsarme (2) mit im Wesentlichen radialer Ausdehnung aufgehängt ist, die im Wesentlichen symmetrisch angeordnet sind.

2.  Mechanischer Resonator nach Anspruch 1, **dadurch gekennzeichnet, dass** die konvexe regelmäßige polygonale schwingende Struktur mit 4k Eckpunkten gleiche Muster besitzt, die sich mit Winkelintervallen von $\pi/2k$ wiederholen, wodurch die polygonale schwingende Struktur eine Geometrie-Isotropie ($\Delta f_g = 0$, $\Delta\alpha_g = 0$) aufweist.

3.  Mechanischer Resonator nach Anspruch 1 oder 2, **dadurch gekennzeichnet, dass** für einen Schwingungsmodus der Ordnung 2 (k = 2) die ebene schwingende Struktur (1) von oktogonaler Form ist und aus einem kristallinen Werkstoff mit trigonaler Struktur mit einem Schnitt in der Ebene X, Y besteht, wodurch die schwingende Struktur eine Werkstoff-Isotropie ($\Delta f_m = 0$, $\Delta\alpha_m = 0$) für die Ordnung 2 hat.

4.  Mechanischer Resonator nach Anspruch 3, **dadurch gekennzeichnet, dass** die oktogonale schwingende Struktur aus Quarz besteht.

5.  Mechanischer Resonator nach Anspruch 1 oder 2, **dadurch gekennzeichnet, dass** für einen Schwingungsmodus der Ordnung 3 (k = 3) die ebene schwingende Struktur (1) eine dodekagonale Form hat und aus einem kristallinen Werkstoff mit kubischer Struktur besteht, mit einem Schnitt in einer Ebene, die die X-Achse oder die Y-Achse oder die Z-Achse enthält, wodurch die schwingende Struktur eine Werkstoff-Isotropie ($\Delta f_m = 0$, $\Delta\alpha_m = 0$) für die Ordnung 3 hat.

6.  Mechanischer Resonator nach Anspruch 5, **dadurch gekennzeichnet, dass** die dodekagonale schwingende Struktur aus Silicium besteht.

7.  Mechanischer Resonator nach einem der Ansprüche 1 bis 6, **dadurch gekennzeichnet, dass** die Aufhängungsarme (2) in einer Anzahl n = 4k vorliegen und um ein Winkelintervall von $\pi/2k$ winkelmäßig beabstandet sind, wodurch die schwingende Struktur eine Aufhängungs-Isotropie ($\Delta f_s = 0$, $\Delta\alpha_s = 0$) hat.

8.  Mechanischer Resonator nach Anspruch 2 und nach einem der Ansprüche 3 bis 6 und nach Anspruch 7, **dadurch gekennzeichnet, dass** die polygonale schwingende Struktur (1) gleichzeitig eine Geometrie-Isotropie ($\Delta f_g = 0$, $\Delta\alpha_g = 0$) und eine Werkstoff-Isotropie ($\Delta f_m = 0$, $\Delta\alpha_m = 0$) und eine Aufhängungs-Isotropie ($\Delta f_s = 0$, $\Delta\alpha_s = 0$) in Frequenz und Kopplung hat, wodurch sie entweder im gyrometrischen oder im gyroskopischen Modus arbeiten kann.

9.  Mechanischer Resonator nach Anspruch 1, **dadurch gekennzeichnet, dass** die polygonale schwingende Struktur mit 4k Eckpunkten (1) aus einem kristallinen Werkstoff mit einer nicht-trigonalen Struktur für k = 2 oder nicht-kubischen Struktur für k = 3 besteht und folglich prinzipiell eine Werkstoff-Anisotropie ($\Delta f_m \neq 0$, $\Delta\alpha_m \neq 0$) hat, und dass die polygonale schwingende Struktur (1) dann eingerichtet ist, um außerdem mindestens eine lokale Geometrieveränderung zu haben, und/oder dass die Aufhängung mindestens eine lokale Veränderung aufweist, so dass die polygonale schwingende Struktur eine Geometrie-Anisotropie ($\Delta f_g \neq 0$, $\Delta\alpha_g \neq 0$) und/oder eine Aufhängungs-Anisotropie ($\Delta f_s \neq 0$, $\Delta\alpha_s \neq 0$) hat, die jeweils geeignet sind, die Werkstoff-Anisotropie zu kompensieren, wodurch die polygonale schwingende Struktur eine Frequenz-Isotropie ($\Delta f = 0$) und eine Kopplungs-Isotropie ($\Delta\alpha = 0$) hat und der Resonator im gyrometrischen oder im gyroskopischen Modus arbeiten kann.

10.  Mechanischer Resonator nach Anspruch 1, **dadurch gekennzeichnet, dass** die Aufhängungsarme (2) in der Anzahl n < 4k vorliegen und um ein Winkelintervall von $2\pi/n$ winkelmäßig beabstandet sind, wobei n so gewählt wird, dass n $\leq$ k - 2 oder n $\geq$ k + 2 gilt, mit n $\neq$ pk (p ist eine ganze Zahl), wobei die polygonale schwingende Struktur also prinzipiell eine Aufhängungs-Anisotropie ($\Delta f_s$ 0, $\Delta\alpha_s$ 0) hat, und dass die polygonale schwingende Struktur (1) dann eingerichtet ist, um außerdem lokale Geometriefehler zu haben, die um einen Winkelwert von $\pi/k$ winkelmäßig voneinander entfernt und in der Lage sind, einen Massefehler der Ordnung 2k zu bewirken, der eine Geometrie-Anisotropie ($\Delta f_g \neq 0$, $\Delta\alpha_g \neq 0$) herbeiführt, die die Aufhängungs-Anisotropie aufgrund der unzureichenden Anzahl von Aufhängungsarmen kompensieren kann, wodurch die polygonale schwingende Struktur eine Isotropie in Frequenz ($\Delta f = 0$) und in Kopplung ($\Delta\alpha = 0$) hat, und der Resonator im gyrometrischen oder im gyroskopischen Modus arbeiten kann.

11. Mechanischer Resonator nach Anspruch 10, **dadurch gekennzeichnet, dass** die lokalen Geometriefehler sich mindestens in Höhe der Verbindungen der Aufhängungsarme (2) mit der schwingenden Struktur (1) befinden.

12. Mechanischer Resonator nach einem der Ansprüche 2 bis 8, **dadurch gekennzeichnet, dass** die schwingende Struktur (1) mindestens eine Geometrie-Anisotropie ($\Delta f_g \neq 0$, $\Delta \alpha_g \neq 0$) oder eine Werkstoff-Anisotropie ($\Delta f_m \neq 0$, $\Delta \alpha_m \neq 0$) oder eine Aufhängungs-Anisotropie ($\Delta f_s \neq 0$, $\Delta \alpha_s \neq 0$) hat, wodurch er nur im gyrometrischen Modus arbeiten kann.

13. Mechanischer Resonator nach einem der vorhergehenden Ansprüche, **dadurch gekennzeichnet, dass** der Sockel (5) die ebene schwingende Struktur (1) umgibt, und dass die Aufhängungsarme (2) sich außerhalb der schwingenden Struktur (1) befinden.

14. Mechanischer Resonator nach einem der Ansprüche 1 bis 11, **dadurch gekennzeichnet, dass** der Sockel ein zentraler Kern (4) im Wesentlichen konzentrisch zur schwingenden Struktur (1) ist, und dass die Aufhängungsarme (2) sich innerhalb der schwingenden Struktur (1) befinden.

15. Mechanischer Resonator nach Anspruch 13 oder 14, **dadurch gekennzeichnet, dass** er außerdem Resonanzbalken (7) aufweist, die von einem zentralen Kern (8) im Wesentlichen konzentrisch zur schwingenden Struktur (1) mit fester Kontur getragen werden und die um den zentralen Kern (8) im Wesentlichen in der Ebene der schwingenden Struktur mit fester Kontur (1) strahlen,
wodurch alle schwingenden Elemente (1, 7) des mechanischen Resonators sich im Wesentlichen in der gleichen Ebene befinden und er in der Lage ist, die drei Komponenten $\Omega x$, $\Omega y$ und $\Omega z$ einer dem Sockel verliehenen Drehgeschwindigkeit $\Omega$ zu erfassen, wobei die Komponenten $\Omega x$ und $\Omega y$ von den Resonanzbalken erfasst werden und die Komponente $\Omega z$ von der schwingenden Struktur mit fester Kontur erfasst wird, und wodurch der mechanische Resonator auf den drei Achsen im gyrometrischen oder im gyroskopischen Modus arbeiten kann.

16. Verwendung eines entlang der Querachse empfindlichen, ebenen mechanischen Resonators mit Betrieb im gyroskopischen Modus nach einem der Ansprüche 11 bis 14 innerhalb eines monolithischen ebenen Beschleunigungs-Kreisel-Trägheitssensors, der die Informationen $\Omega_x$, $\Omega_y$, $\Omega_z$ und $\gamma_x$, $\gamma_y$, $\gamma_z$ liefern kann.

FIG. 1A

FIG. 1B

FIG. 1C

FIG. 2A

FIG. 2B

FIG. 3A

FIG. 3B

FIG. 3C

FIG. 3D

k=2

45°

**FIG. 3E**

k=4

45°

**FIG. 3F**

**FIG. 4A**

**FIG. 4B**

**FIG. 5A**

**FIG. 5B**

**FIG. 5C**

**FIG. 6A**

**FIG. 6B**

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2685964 A
- FR 2741151 A
- EP 0461761 A
- GB 2318184 A
- FR 2741150 A
- FR 0010675